# EUROPEAN PATENT SPECIFICATION

(11) **EP 1 560 721 B1**
(45) Date of publication and mention of the grant of the patent: **27.05.2009**
(21) Application number: 03776975.9
(22) Date of filing: 01.11.2003
(51) Int. Cl.: B60F 3/00, F16D 3/223

(54) **AMPHIBIOUS VEHICLE WHEEL TRANSMISSION ARRANGEMENT**
AMPHIBIENFAHRZEUG MIT RADANTRIEBSANORDNUNG
SYSTEME DE TRANSMISSION DES ROUES D'UN VEHICULE AMPHIBIE

(30) Priority: 01.11.2002 GB 0225492
(43) Date of publication of application: 10.08.2005
(73) Proprietor: Gibbs Technologies Ltd., Warwickshire CV11 4LY (GB); Gibbs Technologies Limited, Douglas Isle of Man IM1 5AS (GB)
(72) Inventor: ROYCROFT, Terence, James, Waiuku RD4 (NZ)
(74) Representative: Wise, Stephen James
(86) International application number: PCT/GB2003/004752
(87) International publication number: WO 2004/039614

(56) References cited:
- WO-A1-02/14092
- US-A- 4 958 584
- US-A- 5 531 179

## Description

The present invention relates to amphibious vehicles.

It is known, for example from US 5,531,179 (Roycroft) which discloses all features of the preamble of claim 1, for amphibious vehicles to have suspensions which are retractable, so that the road wheels are raised above the water line when the vehicle is driven on water. This reduces hydrodynamic resistance, and allows increased speed. The amphibious vehicle can therefore operate in planing, rather than displacement mode; the increased speed over water - say 15 knots, as opposed to 5 knots - being a useful advantage in marketing the vehicle. However, the transmission must be adapted to be compatible with a retractable suspension; as will be explained below. The term "CV joint" used throughout this description refers to a constant velocity joint, a particular form of universal joint used in vehicle transmissions to provide a substantially constant rotating speed of an output shaft over a range of angles between input and output shafts.

An amphibious vehicle according to the invention has a body, retractable road wheels mounted to the body and arranged to be moved from a lower road engaging position in a land mode to an upper faired position in a marine mode, and vice versa, at least one of the wheels being drivable by means of a wheel drive shaft connectable to a prime mover of the vehicle, the drivable wheel(s) having a wheel transmission comprising a drive shaft, the drive shaft comprising an inner and an outer constant velocity joint, **characterized in that** the inner joint is of the fixed or non-plunging type, and the outer constant velocity joint is a plunging joint.

Preferably, at least two wheels are drivable by means of wheel drive shafts connectable to a prime mover of the vehicle, the drivable wheels having wheel transmissions each comprising a drive shaft, each drive shaft comprising an inner and an outer constant velocity joint, **characterized in that** each inner joint is of the fixed or non-plunging type, and each outer constant velocity joint is a plunging joint.

A decoupler may be incorporated in at least one inner constant velocity joint. Said decoupler may also comprise a synchromesh mechanism.

The amphibious vehicle may be a planing vehicle, fitted with a transverse mid-mounted prime mover. Alternatively, a longitudinal prime mover may be fitted.

The invention, and the technical background thereto, will now be described with reference to the accompanying figures, in which:
Figure 1 is a schematic, fore and aft view of a conventional road car transmission to a driven and steered wheel, with the wheel at normal ride height;
Figure 2 is a view similar to figure 1, with the wheel at full bump position;
Figure 3 is a plan view of a conventional road car transmission to a driven and steered wheel as shown in figures 1 and 2;
Figure 4 is a schematic sectional view of a conventional plunging CV joint;
Figure 5 is a schematic, fore and aft view of an amphibious vehicle wheel transmission, suitable for use with a retractable suspension;
Figure 6 shows a driveshaft and CV joints for an amphibious vehicle according to the invention;
Figure 7 shows a driveshaft and CV joints for an amphibious vehicle according to a preferred embodiment of the invention, incorporating a decoupler with synchromesh; and
Figure 8 shows an amphibious vehicle according to the invention.

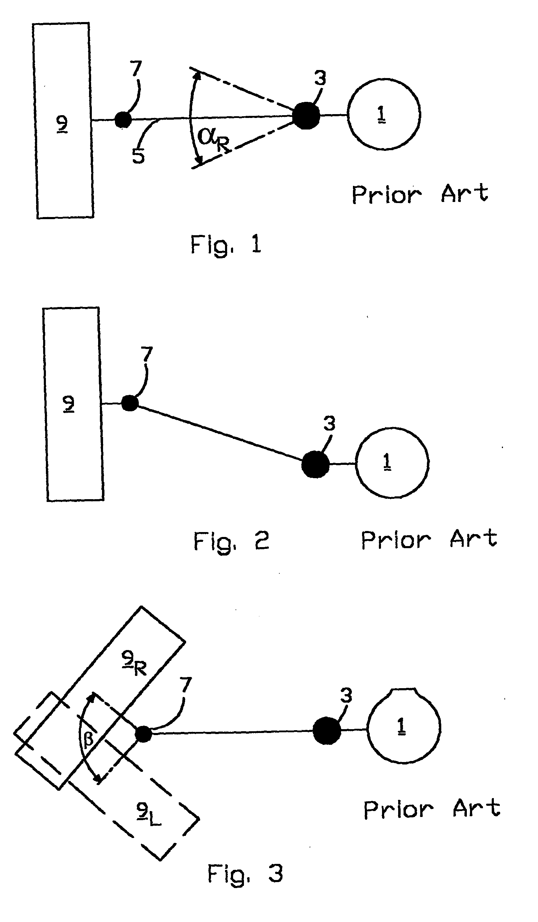

Many engineering problems must be solved in developing a retractable suspension. In particular, the driveshafts for the driven wheels of the amphibious vehicle are rotated in the plane of suspension movement through considerably greater angles than is normal in a road car. Figure 1 shows a simplified view of a road car transmission to one driven wheel, in a view taken along the car looking forward. Numeral 1 represents the differential, and 9 the road wheel. The inner joint on driveshaft 5, commonly a CV (constant velocity) joint, is designated 3; and the outer CV joint 7. As can be seen from figure 1, the total horizontal articulation angle α_{R} for bump and rebound through which inner joint 3 must articulate is about fifty degrees for a typical road suspension. As wheel 9 must remain substantially perpendicular to the road surface, outer joint 7 must also articulate through the same angles; but out of phase with the inner joint, as shown in figure 2, where wheel 9 is at full bump travel.

However, where wheel 9 is a steered wheel, the outer joint has another job to do. Figure 3 is a simplified plan view of a known wheel transmission. As shown, a steered wheel rotates through an angle from position 9_{R} at full right steering lock to 9_{L} at full left lock. Hence, the range of vertical rotation β may be up to ninety degrees. When the horizontal angle of rotation α_{R} and the vertical angle of rotation β are combined, the total compound angle of articulation for the outer CV joint 7 will be around one hundred and twenty degrees. This accounts for the full range of movement of the CV joint, for example from full bump and right hand steering lock, to full rebound and left hand steering lock.

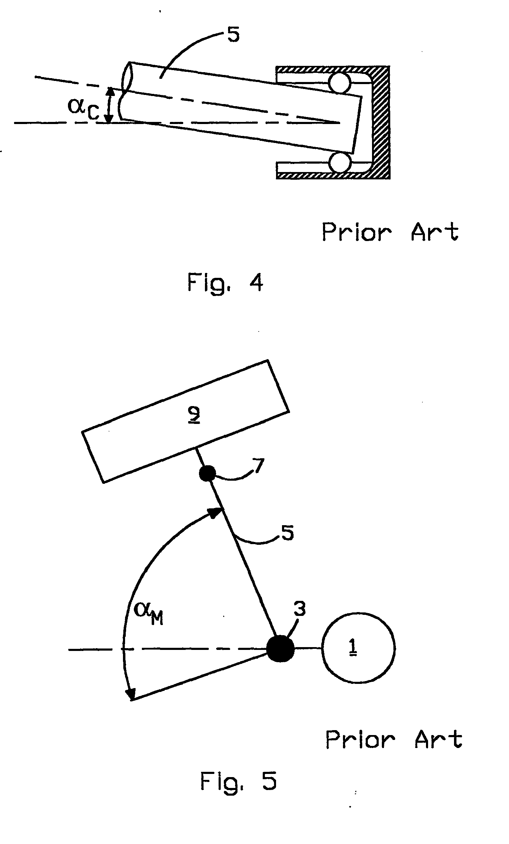

To maintain a consistent track dimension between left and right wheel, the effective length of the wheel driveshaft must be able to alter as the wheel goes up and down. This is achieved on a typical road car with front wheels driving and steering the car, by using a plunge type joint as the inner CV joint; and a fixed joint as the outer CV joint. A plunge joint can only operate within a limited range of driveshaft angles, because the driveshaft will contact the outer sleeve when these angles are exceeded (α_{c}, figure 4). The fixed joint can operate through a larger range of angles; and is therefore used as the outer joint to accommodate steering as well as suspension travel. There is a further reason why the plunge joint is used as the inner joint. It is bulkier than the fixed joint, so it is more easily packaged adjacent to the differential; rather than at the wheel hub, where it competes for space with many other components. Furthermore, if fitted to the wheel hub, it would add unwanted unsprung weight.

Figure 5 shows a simplified view of a known retractable suspension for an amphibious vehicle. Because wheel 9 is retractable, it is raised far above normal full bump position; the range of travel below the static, "straight shaft" position, may be increased compared to a normal road car to allow increased ground clearance when entering and leaving water. Hence, total articulation angle α_{M} may be as much as one hundred and twenty degrees. This range would be even greater if the wheel had to remain vertical when retracted; but as can be seen from the figure, wheel 9 is perpendicular to driveshaft 5 when retracted, to ensure that it is above the vehicle waterline.

Clearly, a standard plunging inner CV joint for a road wheel suspension will not allow the range of movement required for a retractable suspension, as it is only capable of articulation through total angle α_{R} (fig. 1); so it cannot be used in this position on an amphibious vehicle with retractable suspension. Nor can a plunging joint be used at the outer end of the driveshaft on a steered wheel, because its range of operating angles would not allow sufficient steering lock as well as suspension movement. So there are considerable difficulties in using plunging CV joints at either end of the driveshafts for a front engined, front wheel drive amphibious vehicle with retractable suspension.

As discussed above, it is preferable for an amphibious vehicle to be able to plane. To do this, an engine mounted towards the rear of the vehicle is preferable, to allow the craft to "sit back" in the water. Hence, the amphibious vehicle will have its rear wheels driven; and being rear wheels, they will probably not be steered. Hence, the range of operating angles for each CV joint on each driveshaft is reversed compared to the convention for driven front wheels on road cars.

If a fixed CV joint is used at the inner end of the amphibious vehicle driveshaft, it will allow a larger range of horizontal articulation of the driveshaft than the prior art road car suspension shown in figures 1 and 2. However, the fixed joint is not taken beyond its limits of articulation, as there is no steering action at the inner end of the driveshaft. A transmission layout for a planing amphibious vehicle is disclosed in figure 3 of our co-pending application, publication number WO 02/14092. This shows inner CV joints on a mid-engined, rear wheel drive amphibious vehicle; which are combined with decouplers to allow drive to the road wheels to be disengaged when the vehicle is driven on water. As the decoupler should be mounted rigidly to encourage smoothness of operation, it is preferred that the decoupler should be used on an inner driveshaft joint, in at least one of the wheel driveshafts.

The disclosed CV joints also include a synchromesh unit for smooth engagement and disengagement of said decouplers. It can be seen from figure 2 of the co-pending application that these joints are fixed CV joints. This layout is neat as far as it goes, but does not resolve the issue of how to accommodate changes in the length of each driveshaft as the suspension goes up and down; both in normal road use, and as the wheels are retracted to allow planing on water. It is possible to use fixed CV joints at both ends of each shaft, with a driveshaft in two pieces with a splined joint to allow variation in shaft length. Such technology is in current use in a premium sport utility vehicle, and therefore does not form part of the invention as claimed. A simpler, cheaper, and less bulky solution is to use plunging outer CV joints at the outer ends of the driveshafts. As a retracted wheel on an amphibious vehicle does not have to remain perpendicular to the road surface, and there is no steering on the back axle, the range of articulation which is sufficient for the inner CV joint on a road wheel transmission is also sufficient for the outer CV joint on a non-steered axle of an amphibious vehicle with retractable suspension.

The bulk of plunging CV joints means that the hub area of the wheel suspension must be designed to accommodate such joints. This drawback -and the concomitant increase in unsprung weight in the hub area- are acceptable compromises in an amphibious vehicle, where such unusual features must be designed in and accounted for from the start of the vehicle development programme.

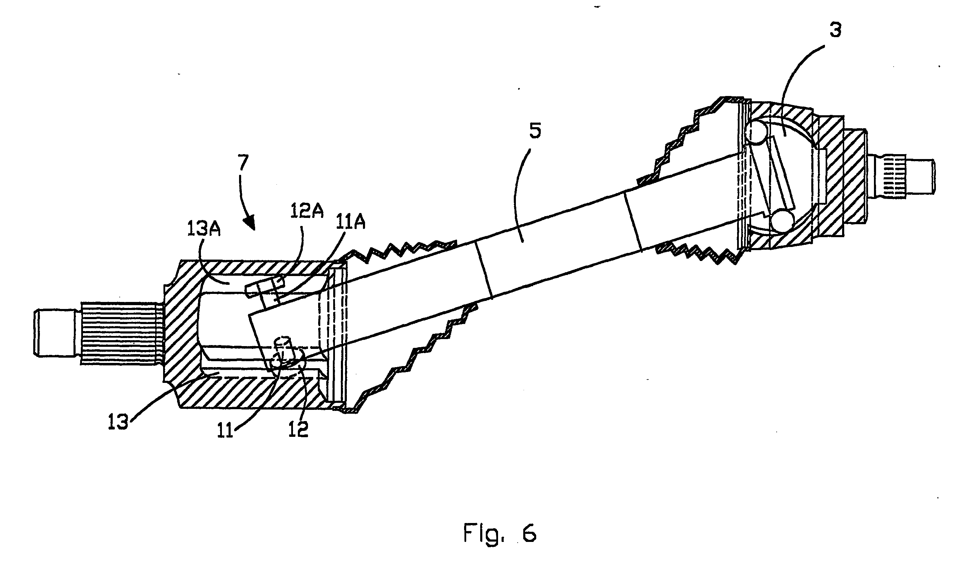

Figure 6 shows a driveshaft 5 for an amphibious vehicle according to the invention. Inner CV joint 3 is adjacent to the differential, and comprises a conventional fixed CV joint according to claim 1. Outer CV joint 7 is adjacent to the road wheel, and comprises a plunging joint. Such a joint comprises part spherical rollers 12, 12A on pins 11, 11A; which transmit drive through tracks 13, 13A cut into the body of CV joint 7; even when driveshaft 5 is cranked over at an angle as shown in this figure. Typically, three tracks 13 are provided, hence the name "tripode joint". Only two of these tracks are visible in this sectioned view.

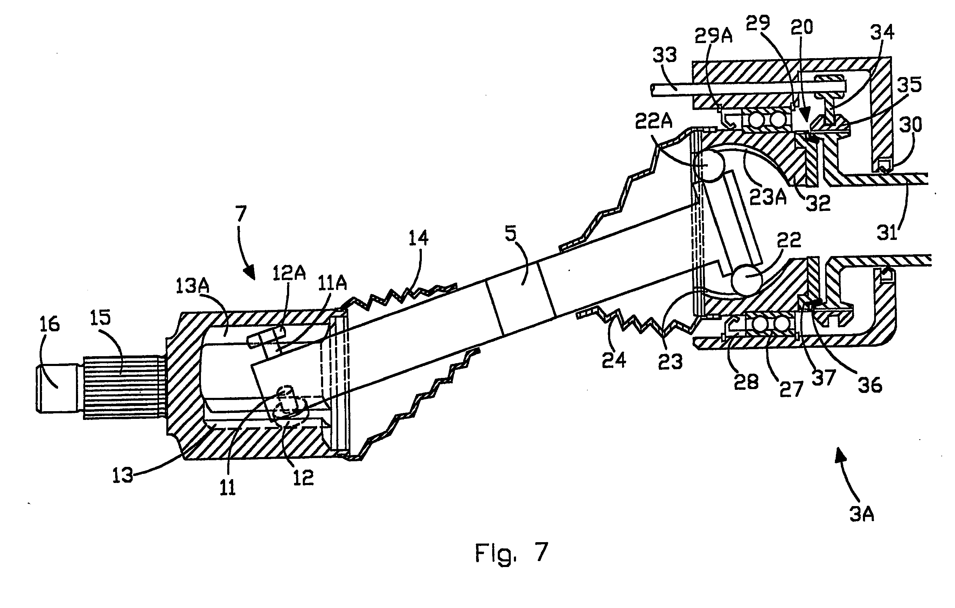

Figure 7 shows more detail of this plunging joint, which also comprises dust cover 14, retained by clips (not shown); hub drive spline 15; and wheel mounting spigot 16. The inner, fixed CV joint 3A in this case incorporates a decoupler 20 with a synchromesh mechanism. In this joint, the rolling elements comprise balls 22 and 22A in tracks 23 and 23A; numeral 24 denotes the dust cover. Bearing 27 allows the output end 32 of joint 3A to freewheel when drive is decoupled. The bearing is protected from dust and water ingestion by seal 28; the bearing and seal being retained by circlips 29 and 29A. A second seal 30 is fitted to input shaft 31. As shown in this drawing, drive is decoupled; to couple drive, actuator 33, which may for example be a rod, is pulled out of joint 3A. Selector arm 34 pulls drive ring 35 to the left as seen in this drawing, so that the ring engages with synchromesh baulk ring 36. The baulk ring then engages with sleeve 37, bringing output end 32 up to speed and allowing smooth gear tooth engagement. A synchrocone (not shown) may also be fitted to output end 32. More detail of this decoupler may be found in our co-pending PCT patent application, publication no. WO 02/14092A1.

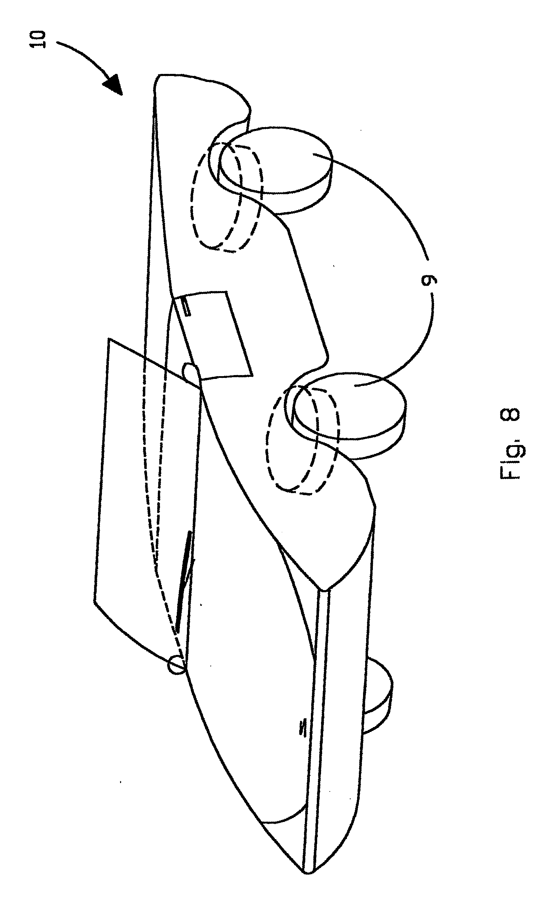

Figure 8 shows an amphibious vehicle 10 with retractable wheels 9 according to the invention. Wheels 9 are shown in road engaging position in solid lines, and in upper faired position in dashed lines. Such a vehicle with retractable wheels may conveniently be designed to be a planing vehicle; and may suitably be fitted with a transverse, mid-mounted engine or other prime mover.

It will be appreciated that further modifications to the transmission layout may also be made as required without departing from the scope of the invention. In particular, it may be found convenient to find room for the bulky outer plunging CV joint by placing the driveshaft outer bearing ahead of the lower suspension link(s), as described in our co-pending application no. GB0225493.6.

Although the prime mover of the claims may be an internal combustion engine, it could be any other suitable driving means, for example an electric motor driven by electricity from a fuel cell. The term "body" may be taken to mean an open frame, a monocoque, or any other enclosure.

## Claims

1. An amphibious vehicle (10) having a body, retractable road wheels (9) mounted to the body and arranged to be moved from a lower road engaging position in a land mode to an upper faired position in a marine mode, at least one of the wheels (9) being drivable by means of a wheel drive shaft (5) connectable to a prime mover of the vehicle, the drivable wheel(s) (9) having a wheel transmission comprising a drive shaft (5), the drive shaft (5) comprising an inner and an outer constant velocity joint (3, 7), **characterized in that** the inner joint (3) is of the fixed or non-plunging type, and the outer constant velocity joint (7) is a plunging joint.

2. An amphibious vehicle according to claim 1, where at least two wheels (9) are drivable by means of wheel drive shafts (5) connectable to a prime mover of the vehicle, the drivable wheels (9) having wheel transmissions each comprising a drive shaft (5), each drive shaft (5) comprising an inner and an outer constant velocity joint (3, 7), and where each inner joint (3) is of the fixed or non-plunging type, and each outer constant velocity joint (7) is a plunging joint.

3. An amphibious vehicle according to claim 1 or claim 2, where a decoupler (20) is incorporated in at least one inner constant velocity joint (3).

4. An amphibious vehicle according to claim 3, where the or each decoupler (20) incorporates a synchromesh mechanism.

5. An amphibious vehicle according to any of the above claims, where the vehicle is a planing vehicle, fitted with a transverse, mid-mounted prime mover.

6. An amphibious vehicle according to any of claims, 1 to 4, where the vehicle is a planing vehicle, fitted with a longitudinal prime mover.

## Patentansprüche

1. Ein Amphibienfahrzeug (20) mit einer Karosserie, einziehbaren Straßenrädern (9), die an der Karosserie montiert und angeordnet sind, um von einer unteren Straßenlage-Position in einem Land-Modus zu einer oberen stromlinienförmigen Position in einem Wasser-Modus bewegt zu werden, wobei mindestens eines der Räder (9) mittels eines Radantriebsschafts (5) antreibbar ist, der an eine Antriebsmaschine des Fahrzeugs anschließbar ist, wobei das Rad (die Räder) (9) einen Radantrieb aufweisen, der einen Antriebsschaft (5) beinhaltet, wobei der Antriebsschaft (5) ein inneres und ein äußeres konstantes Geschwindigkeitsgelenk (3, 7) beinhaltet, **dadurch gekennzeichnet, dass** das innere Gelenk (3) feststehend oder vom Nichtverschiebetyp ist und das äußere konstante Geschwindigkeitsgelenk (7) ein Verschiebegelenk ist.

2. Ein Amphibienfahrzeug nach Anspruch 1, wobei mindestens zwei Räder (9) mittels Radantriebsschäften (5) antreibbar sind, die an eine Antriebsmaschine des Fahrzeugs anschließbar sind, wobei die antreibbaren Räder (9) Radbantriebe aufweisen, die jeweils einen Antriebsschaft (5) beinhalten, wobei jeder Antriebsschaft (5) ein inneres und ein äußeres konstantes Geschwindigkeitsgelenk (3, 7) beinhaltet und wobei jedes innere Gelenk (3) vom feststehenden oder Nichtverschiebetyp ist und jedes äußere konstante Geschwindigkeitsgelenk (7) ein Verschiebegelenk ist.

3. Ein Amphibienfahrzeug nach Anspruch 1 oder Anspruch 2, wobei ein Entkoppler (10) in mindestens ein inneres konstantes Geschwindigkeitsgelenk (3) eingearbeitet ist.

4. Ein Amphibienfahrzeug nach Anspruch 3, wobei der oder jeder Entkoppler (10) einen Synchrongetriebe-Mechanismus beinhaltet.

5. Ein Amphibienfahrzeug nach einem der obigen Ansprüche, wobei das Fahrzeug ein Planierfahrzeug ist, das mit einer mittig montierten Querantriebsmaschine ausgestattet ist.

6. Ein Amphibienfahrzeug nach einem der Ansprüche 1 bis 4, wobei das Fahrzeug ein Planierfahrzeug ist, das mit einer Längsantriebsmaschine ausgestattet ist.

## Revendications

1. Véhicule amphibie (10) comportant un corps, des roues pour la route, rétractables (9) montées sur le corps et agencées de façon à se déplacer d'une position inférieure pour un engagement avec la route en mode terrestre à une position supérieure carénée en mode marin, l'une des roues (9) au moins pouvant être entraînée au moyen d'un arbre d'entraînement de roue (5) pouvant être raccordé à un mécanisme d'entraînement principal du véhicule, les roues motrices (9) comportant un système de transmission des roues comprenant un arbre d'entraînement (5), l'arbre d'entraînement (5) comprenant un joint à double cardan intérieur et un joint à double cardan extérieur (3, 7), **caractérisé en ce que** le joint intérieur (3) est du type fixe ou sans effet piston, et **en ce que** le joint à double cardant extérieur (7) est un joint à effet piston.

2. Véhicule amphibie selon la revendication 1, dans lequel deux roues (9) au moins peuvent être entraînées au moyen des arbres d'entraînement de roue (5) pouvant être raccordés à un mécanisme de déplacement principal du véhicule, les roues motrices (9) comportant des transmissions de roues comprenant, chacune, un arbre d'entraînement (5), chaque arbre d'entraînement (5) comprenant un joint à double cardan intérieur et un joint à double cardan extérieur (3, 7), et où chaque joint intérieur (3) est du type fixe ou du type sans effet piston, et chaque joint à double cardan extérieur (7) est un joint à effet piston.

3. Véhicule amphibie selon la revendication 1 ou la revendication 2, dans lequel un découpleur (20) est incorporé dans au moins un joint à double cardan intérieur (3).

4. Véhicule amphibie selon la revendication 3, dans lequel le, ou chaque, découpleur (20) incorpore un mécanisme de synchronisation des vitesses.

5. Véhicule amphibie selon l'une quelconque des revendications précédentes, dans lequel le véhicule est un véhicule hydroglisseur, pourvu d'un moteur d'entraînement principal, transverse, monté entre les axes.

6. Véhicule amphibie selon l'une quelconque des revendications 1 à 4, dans lequel le véhicule est un véhicule hydroglisseur, pourvu d'un moteur d'entraînement principal longitudinal.
